Europäisches Patentamt

(19) European Patent Office

Office européen des brevets

(11) Veröffentlichungsnummer: **0 181 993**
**B1**

(12) EUROPÄISCHE PATENTSCHRIFT

(45) Veröffentlichungstag der Patentschrift:
04.11.87

(51) Int. Cl.⁴: **B 66 C 1/42**, B 66 C 1/59

(21) Anmeldenummer: **85104030.3**

(22) Anmeldetag: **03.04.85**

(54) **Vorrichtung zum Ergreifen und Absetzen von Stückgütern.**

(30) Priorität: **09.11.84 DE 3440954**

(43) Veröffentlichungstag der Anmeldung:
**28.05.86 Patentblatt 86/22**

(45) Bekanntmachung des Hinweises auf die Patenterteilung:
**04.11.87 Patentblatt 87/45**

(84) Benannte Vertragsstaaten:
**AT BE CH DE FR GB IT LI LU NL SE**

(56) Entgegenhaltungen:
**DE-B-1 230 988**
**FR-A-2 135 905**
**US-A-2 490 467**
**US-A-2 564 357**
**US-A-3 306 646**

**Prospektblätter Fa. NÜTRO "Handling Roboter ACE"**
**Prospekt Fa. BEUMER "ROBOTPAC"**

(73) Patentinhaber: **Möllers Maschinenfabrik GmbH, Sudhoferweg 93, D-4720 Beckum (DE)**

(72) Erfinder: **Klüpfel, Olaf, Dr., Am Ostweg 18, D-3171 Eickhorst (DE)**
Erfinder: **Schulze- Frielinghaus, Walter, Dr., Gutenbergweg 15, D-4720 Beckum (DE)**
Erfinder: **Scholz, Erhard, Händelweg 20, D-4406 Drensteinfurt (DE)**

(74) Vertreter: **Patentanwälte Meinke und Dabringhaus Dipl.- Ing. J. Meinke Dipl.- Ing. W. Dabringhaus, Westenhellweg 67, D-4600 Dortmund 1 (DE)**

EP 0 181 993 B1

## Beschreibung

Die Erfindung betrifft eine Vorrichtung zum Ergreifen und Absetzen von Stückgütern mit gelenläufg zueinander um ihre oberen Enden verschwenkbaren, zwischen ihren unteren Enden das Stückgut untergreifend aufnehmenden Greiferarmen.

Bekannte Vorrichtungen dieser Art (Prospektblatt der Firma Nütro Maschinenbau GmbH, Nürnberg "Fuji-Nütro Handling-Roboter ACE") vermeiden aufgrund ihres formschlüssigen Ergreifens der Stückgüter von unten die Nachteile von Stückgüter kraftschlüssig, z. B. mittels pneumatischer Sauggreifer, nur von oben ergreifender Vorrichtungen, welche im wesentlichen darin bestehen, daß sich die Stückgüter beim Anheben erheblich verformen können, welche Verformungen weitgehend erhalten bleiben, so daß sich Stapel minderer Qualität ergeben. Ferner stellen die nur von oben kraftschlüssig ergreifenden Vorrichtungen besondere Anforderungen an die Qualität des Verpackungsmaterials, beispielsweise bei Zementsäcken. So muß ausreichende Festigkeit gegeben sein, das Sackmaterial darf nicht porös sein und muß eine ausreichend glatte Oberfläche haben, um pneumatische Saugsysteme ansetzen zu können.

Bekannt sind weiterhin auch formschlüssig arbeitende Greifer, deren zwischen sich das Stückgut aufnehmende Greiferarme gegenläufig bewegbar sind (Prospektblatt der Firma Beumer Maschinenfabrik KG, Beckum "Robotpac - Der Universal-Palettiererautomat").

Beiden vorstehend erörterten, das Stückgut untergreifenden Vorrichtungen haftet jedoch der Nachteil an, daß sie das Ablegen der Stückgüter an einem von vier Seiten umschlossenen Ablegeplatz nicht gestatten, z. B. nicht das Absetzen eines Stückgutes in eine Lücke zwischen bereits vorher abgesetzten gleichen Stückgütern.

Aufgabe der Erfindung ist die Schaffung einer Lösung, welche bei einer Vorrichtung der eingangs bezeichneten Art das Ablegen eines Stückgutes auch an solchen Ablegeplätzen in schonender Weise für das Stückgut ermöglicht, die vierseitig entsprechend der Größe des betreffenden Stückgutes begrenzt sind, ohne dabei das betreffende abzulegende Stückgut und/oder angrenzende Stückgüter wesentlich zu deformieren.

Bei einer Vorrichtung der eingangs bezeichneten Art wird diese Aufgabe gemäß der Erfindung dadurch gelöst, daß die mit den Greiferarme drehfest verbundenen Schwenkachsen gleichzeitig mit ihrer gegenläufigen Schwenk- bzw. Drehbewegung gegenläufig zueinander bewegbar sind.

Aufgrund dieser Ausbildung wird nämlich gewährleistet, daß sich die Greiferarme nach dem Verbringen des Stückgutes an seinen Ablegeplatz zwischen schon vorher verlegten angrenzenden Stückgütern und dem gerade abgelegten Stückgut beim Öffnen der Greiferarme geschmeidig herausziehen können, ohne das gerade abgelegte Stückgut und die benachbarten Stückgüter dabei zu beschädigen.

Besonders vorteilhaft ist es dabei, wenn die Greiferarme kurvenförmig einwärts gerichtete untere Enden aufweisen, wobei man die kurvenförmige Ausgestaltung bei immer den gleichen handzuhabenden Stückgütern, wie z. B. Zementsäcken, den betreffenden Stückgütern optimal anpassen kann.

Zweckmäßig ist es ferner, wenn die Schwenkbewegung der Greiferarme während des Schließvorganges derart erfolgt daß die Greiferarme sich entlang einer vorbestimmten geometrischen Bahn bewegen, weil dadurch ein sicheres Ergreifen der Stückgüter gewährleistet wird.

Eine besonders einfache und zweckmäßige Ausgestaltung ergibt sich dabei, wenn jeder Greiferarm unter einer diesen in Öffnungstellung schwenkenden Krafteinwirkung, z. B. einer entsprechenden Federbelastung steht, durch die jeder Greiferarm gegen ein außen zugeordnetes Führungselement gedrückt wird und an welcher der Greiferarm während seiner Schließbewegung entlanggleitet, bis seine im wesentlichen vertikale Schließstellung erreicht ist.

Ferner empfiehlt es sich, die Schwenkbewegung der Greiferarme während des Öffnungsvorgangs kinematisch unbestimmt in Abhängigkeit vom Konturenverlauf des ergriffenen und benachbarter Stückgüter erfolgen zu lassen, weil dadurch ein besonders schonendes, dem jeweiligen Stückgut angepaßtes Ablegen und Herausziehen der Greiferarme stattfindet.

Eine vorteilhafte Gestaltung ergibt sich dabei, wenn jedem Greiferarm eine stationäre Führung zugeordnet ist, gegen die der Greiferarm am Ende seiner Öffnungsbewegung unter zwangsweisem Nachaußenschwenken greift, während der Greiferarm während des ersten Teils seiner durch Einwärtsbewegen seiner Schwenkachse erfolgenden Öffnungsbewegung unter einer Krafteinwirkung, beispielsweise einer Federbelastung, einerseits frei nach außen schwenkbar, andererseits aber durch außen gegenliegende benachbarte Stückgüter solange festhaltbär ist, bis sich die kurvenförmigen Enden der Greiferarme zwischen den Stückgütern herausziehen.

Zweckmäßig können die Schwenkachsen der Greiferarme zwischen gemeinsamen Führungsschienen gegenläufig zueinander bewegbar sein.

Die Greiferarme können von Reihen von Greiferzinken aber auch von durchgehenden Blechen od. dgl. gebildet sein. Schließlich kann jeder Greiferarm beidseitige Greiferzinken aufweisen, zwischen deren freien Enden eine Walze oder eine Anzahl von Rollen drehbar gelagert ist, um derart die Reibungskräfte zwischen Greiferarmen und Stückgütern noch weiter zu verringern.

Die Erfindung ist nachstehend anhand der Zeichnung beispielsweise näher erläutert. Diese zeigt in

Fig. 1 eine schematische Seitendarstellung einer Vorrichtung gemäß der Erfindung mit geöffneten Greiferarmen in durchgehenden Linien und Greiferarmen in geschlossener Stellung in gestrichelten Linien,

Fig. 2 die Vorrichtung nach Fig. 1 beim Absetzen eines ergriffenen Stückgutes zwischen schon vorher abgelegten Stückgütern gleicher Art und in

Fig. 3 eine der Darstellung gemäß Fig. 2 entsprechende Darstellung beim Öffnen der Greiferarme.

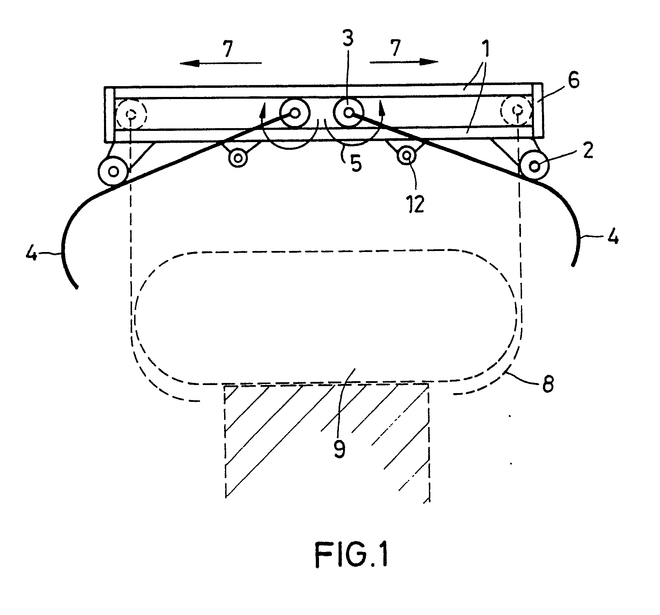

Die in Fig. 1 schematisch wiedergegebene Vorrichtung weist parallele Führungsschienen 1 mit seitlichen Endanschlägen 6 an jeder Stirnseite der Vorrichtung auf, zwischen denen jeweils zwei Laufrollen 3 in nicht näher gezeigter Weise gegenläufig zueinander bewegbar sind. Die ebenfalls nicht näher dargestellten, zwischen den stirnseitigen Laufrollen 3 angeordneten Achsen derselben sind mit jeweils einem Greiferarm 4 starr bzw. drehfest verbunden, wobei jede Achse unter einer Federbelastung steht, welche die beiden Greiferarme 4 gegenläufig in Öffnungsstellung zu schwenken suchen, wie dies durch die Pfeile 5 angedeutet ist.

An den Enden der Führungen 1 sind ferner Führungsrollen 2 angeordnet, gegen die in der in Figur 1 in durchgehenden Linien wiedergegebenen Öffnungsstellung der Greiferarme diese unter ihrer Federbelastung S anliegen.

Weiter einwärts sind an den Führungen 1 ferner weitere Führungsrollen 12 angeordnet, deren Funktion nachfolgend näher erläutert wird.

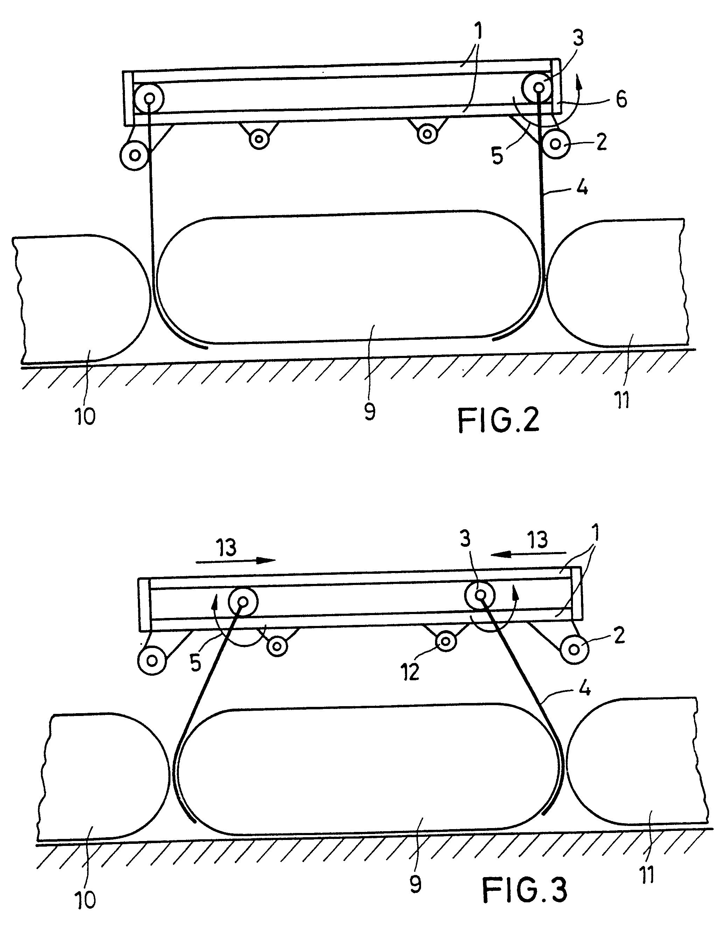

Die Arbeitsweise der Vorrichtung ist wie folgt: Aus der in Fig. 1 in durchgehenden Linien wiedergegebenen Stellung der Greiferarme 4 und der Laufrollen 3 werden die Laufrollen 3 mit zwischen diesen angeordneten Achsen und an diesen drehfest angeordneten Greiferarmen 4 in Richtung der Pfeile 7 gegenläufig auseinanderbewegt, bis die Greiferarme ihre in Fig. 1 mit 8 bezeichnete, im wesentlichen vertikale Greifstellung eingenommen haben, in der sie ein zu ergreifendes Stückgut in Form eines Sackes 9 umschließen. Nach Beendigung des Schließvorganges wird die Vorrichtung angehoben und dann oberhalb der Stelle, an der das Stückgut abzulegen ist, positioniert. Fig. 2 zeigt die Stellung der Vorrichtung nach dem Absenken des Stückgutes a zwischen zwei bereits abgelegte Stückgüter 10 und 11 gleicher Art. Daraufhin werden die Laufrollen 3 in Richtung der Pfeile 13 gemäß Fig. 3 bewegt. Durch eine geeignete, dem Bewegungsablauf des Greifers angepaßte Geometrie der Greiferarme 4 ist dabei ein sanftes bzw. schonendes Herausziehen der Greiferarme sowohl aus dem Spalt zwischen dem abgelegten Stückgut 9 und darunterliegenden Stückgütern als auch aus dem Spalt zwischen dem gerade abgelegten Stückgut 9 und den danebenliegenden Stückgütern 10 und 11 gewährleistet.

Während des Öffnens der Greiferarme 4 sind diese kraftschlüssig durch die Rückstellfedern 5 und die Rückhaltekräfte aufgrund einer möglichen Klemmung zwischen abgelegtem Stückgut und der Auflagefläche und ggf. bereits seitlich liegenden Stückgütern geführt. Gegen Ende des Öffnungsvorganges erfolgt anhand der vorzugsweise seitlich verstellbaren Führungsrollen 12 ein zwangsweises Öffnen der Greiferarme 4, sofern noch erforderlich.

Natürlich ist das beschriebene Ausführungsbeispiel in vielfacher Weise abzuändern, ohne den Grundgedanken der Erfindung zu verlassen. So können die Greiferarme sowohl als durchgehende Bleche oder als Reihen von Greiferarmzinken ausgebildet sein. Eine weitere Möglichkeit der Ausgestaltung der Greiferarme besteht darin, zwischen den freien Enden beidseitiger Greiferzinken eine Walze oder eine Anzahl von Rollen drehbar zu lagern, um dadurch die Reibungskräfte zwischen den Greiferzinken und den Stückgütern, insbesondere beim Öffnungsvorgang der Greiferarme, weiter zu verringern. Die Kraftbeaufschlagung der Greiferarme kann auch in beliebiger anderer Weise erfolgen, sofern die geschilderten Funktionen gewährleistet sind u. dgl. mehr.

**Patentansprüche**

1. Vorrichtung zum Ergreifen und Absetzen von Stückgütern mit gegenläufig zueinander um ihre oberen Enden verschwenkbaren, zwischen ihren unteren Enden das Stückgut untergreifend aufnehmenden Greiferarmen,
dadurch gekennzeichnet,
daß die mit den Greiferarmen (4) drehfest verbundenen Schwenkachsen gleichzeitig mit ihrer gegenläufigen Schwenk- bzw. Drehbewegung gegenläufig zueinander bewegbar sind.

2. Vorrichtung nach Anspruch 1,
dadurch gekennzeichnet,
daß die Greiferarme (4) kurvenförmig einwärts gerichtete untere Enden aufweisen.

3. Vorrichtung nach Anspruch 1 oder 2,
dadurch gekennzeichnet,
daß die Bewegung der Greiferarme (4) während des Schließvorganges derart erfolgt, daß die Greiferarme sich entlang einer vorbestimmten geometrischen Bahn bewegen.

4. Vorrichtung nach Anspruch 3,
dadurch gekennzeichnet,
daß jeder Greiferarm (4) unter einer diesen in Öffnungsstellung schwenkenden Krafteinwirkung (5) steht, durch die jeder Greiferarm gegen ein außen zugeordnetes Führungselement (2) gedrückt wird, an welchem der Greiferarm während seiner Schließbewegung entlanggleitet, bis seine im wesentlichen vertikale Schließstellung erreicht ist.

5. Vorrichtung nach Anspruch 3 oder 4, dadurch gekennzeichnet, daß die Greiferarme (4) derart betätigbar sind, daß während des Öffnungsvorgangs die Greiferarme in Abhängigkeit vom Konturenverlauf des ergriffenen und benachbarter Stückgüter (9, 10, 11) bewegbar sind.

6. Vorrichtung nach Anspruch 5, dadurch gekennzeichnet, daß jedem Greiferarm (4) eine stationäre Führung (12) zugeordnet ist, gegen die der Greiferarm (4) am Ende seiner Öffnungsbewegung unter zwangsweisem Nachaußenschwenken greift, während der Greiferarm während des ersten Teils seiner durch Einwärtsbewegen seiner Schwenkachse erfolgenden Öffnungsbewegung unter einer Krafteinwirkung einerseits frei nach außen schwenkbar, andererseits aber durch außen gegenliegende benachbarte Stückgüter (10, 11) solange festhaltbar ist, bis sich die kurvenförmigen Enden der Greiferarme (4) zwischen den Stückgütern (9, 10, 11) herausziehen.

7. Vorrichtung nach Anspruch 1 oder einem der folgenden, dadurch gekennzeichnet, daß die Schwenkachsen der Greiferarme (4) zwischen gemeinsamen Führungsschienen (1) gegenläufig zueinander bewegbar sind.

8. Vorrichtung nach Anspruch 1 oder einem der folgenden, dadurch gekennzeichnet, daß die Greiferarme (4) von Reihen von Greiferzinken gebildet sind.

9. Vorrichtung nach Ansprüchen 1 bis 7, dadurch gekennzeichnet, daß die Greiferarme (4) von durchgehenden Blechen gebildet sind.

10. Vorrichtung nach Ansprüchen 1 bis 7, dadurch gekennzeichnet, daß jeder Greiferarm von beidseitigen Greiferzinken gebildet ist, zwischen deren freien Enden eine Walze oder eine Anzahl von Rollen drehbar gelagert ist.

**Claims**

1. Apparatus for gripping and setting down articles comprising gripper arms which are pivotable in opposite directions to each other about their upper ends and which pick up the article by engaging beneath same, between their lower ends, characterised in that the pivot axis members which are non-rotatably connected to the gripper arms (4) are movable in opposite directions relative to each other simultaneously with their opposite pivotal or rotary movement.

2. Apparatus according to claim 1 characterised in that the gripper arms (4) have lower ends which are directed inwardly in a curved configuration.

3. Apparatus according to claim 1 or claim 2 characterised in that the movement of the gripper arms (4) during the closing operation is such that the gripper arms move along a predetermined geometrical path.

4. Apparatus according to claim 3 characterised in that each gripper arm (4) is subjected to the effect of a force (5) which pivots same into the open position and which causes each gripper arm to be pressed against an outwardly associated guide element (2) along which the gripper arm slides during the closing movement thereof, until reaching its substantially vertical closed position.

5. Apparatus according to claim 3 or claim 4 characterised in that the gripper arms (4) are actuable in such a way that during the opening operation the gripper arms are movable in dependence on the configuration of the gripped and adjacent articles (9, 10, 11).

6. Apparatus according to claim 5 characterised in that associated with each gripper arm (4) is a stationary guide (12) against which the gripper arm (4) engages at the end of its opening movement, with the gripper arm being forced to pivot outwardly, while during the first part of its opening movement which is produced by inward movement of its pivot axis member, under the effect of a force, the gripper arm is pivotable freely outwardly, on the one hand, but on the other hand can be retained by adjacent articles (10, 11) lying thereagainst on the outside, until the curved ends of the gripper arms (4) are pulled out between the articles (9, 10, 11).

7. Apparatus according to claim 1 or one of the following claims characterised in that the pivot axis members of the gripper arms (4) are movable in opposite directions relative to each other between joint guide rails (1).

8. Apparatus according to claim 1 or one of the following claims characterised in that the gripper arms (4) are formed by rows of gripper prongs.

9. Apparatus according to claims 1 to 7 characterised in that the gripper arms (4) are formed by continuous plates.

10. Apparatus according to claims 1 to 7 characterised in that each gripper arm is formed by gripper prongs on both sides, between the free ends of which a roller or a number of rollers is rotatably mounted.

**Revendications**

1. Dispositif pour saisir et déposer des produits divers, présentant des bras de préhension qui peuvent pivoter l'un par rapport à l'autre dans des sens opposés, autour de leurs extrémités supérieures, et qui reçoivent l'objet entre leurs extrémités inférieures, en l'emprisonnant par-dessous, caractérisé par le fait

que les axes de pivotement assujettis en rotation aux bras de préhension (4) sont mobiles l'un par rapport à l'autre dans des sens opposés, simultanément à leur mouvement respectivement pivotant ou rotatoire dans des sens opposés.

2. Dispositif selon la revendication 1, caractérisé par le fait

que les bras de préhension (4) présentent des extrémités inférieures dirigées curvilignement vers l'intérieur.

3. Dispositif selon la revendication 1 ou 2, caractérisé par le fait

que le mouvement des bras de préhension (4), lors du processus de fermeture, se déroule d'une manière telle que ces bras de préhension se déplacent le long d'une trajectoire géométrique prédéterminée.

4. Dispositif selon la revendication 3, caractérisé par le fait

que chaque bras de préhension (4) est soumis à l'action d'une force (5) qui le fait pivoter à la position d'ouverture, et par l'intermédiaire de laquelle chaque bras de préhension est poussé contre un élément de guidage (2) associé extérieurement, le long duquel le bras de préhension glisse, au cours de son mouvement de fermeture, jusqu'à ce que sa position de fermeture sensiblement verticale soit atteinte.

5. Dispositif selon la revendication 3 ou 4, caractérisé par le fait

que les bras de préhension (4) sont actionnables de manière telle que, au cours du processus d'ouverture, ces bras de préhension puissent être déplacés en fonction de la configuration de l'objet saisi et d'objets voisins (9, 10, 11).

6. Dispositif selon la revendication 5, caractérisé par le fait

qu'un guide stationnaire (12) est associé à chaque bras de préhension (4), guide contre lequel le bras de préhension (4) vient en prise à la fin de son mouvement d'ouverture par pivotement forcé vers l'extérieur, tandis que, lors de la première partie de son mouvement d'ouverture résultant d'un mouvement rentrant de son axe de pivotement, le bras de préhension peut, d'une part, pivoter librement vers l'extérieur sous l'action d'une force, mais peut d'autre part être arrêté, par l'intermédiaire d'objets voisins (10, 11) contre lesquels il porte extérieurement, jusqu'à ce que les extrémités curvilignes des bras de préhension (4) s'extirpent d'entre les objets (9, 10, 11).

7. Dispositif selon la revendication 1 ou l'une des suivantes, caractérisé par le fait

que les axes de pivotement des bras de préhension (4) peuvent être déplacés l'un par rapport à l'autre dans des sens opposés, entre des rails communs de guidage (1).

8. Dispositif selon la revendication 1 ou l'une des suivantes, caractérisé par le fait

que les bras de préhension (4) sont formés par des rangées de dents de préhension.

9. Dispositif selon les revendications 1 à 7, caractérisé par le fait

que les bras de préhension (4) sont formés par des tôles ininterrompues.

10. Dispositif selon les revendications 1 à 7, caractérisé par le fait

que chaque bras de préhension est formé par des dents de préhension situées de part et d'autre, entre les extrémités libres desquelles un rouleau ou un certain nombre de galets est monté rotatif.

FIG.1

FIG.2

FIG.3